# EUROPEAN PATENT SPECIFICATION

(11) **EP 2 903 426 B1**
(45) Date of publication and mention of the grant of the patent: **08.05.2019**
(21) Application number: 13844276.9
(22) Date of filing: 26.09.2013
(51) Int. Cl.: A01K 61/13, A01K 79/02, A01K 61/60

(54) **ELECTRICAL FENCE AND METHOD OF DAMAGING A PELAGIC LARVA IN SEA WATER**
ELEKTRISCHER ZAUN UND VERFAHREN ZUR BESCHÄDIGUNG VON PELAGISCHEN LARVEN IM MEERWASSER
CLÔTURE ÉLECTRIQUE ET PROCÉDÉ POUR AFFECTER DES LARVES PÉLAGIQUES EN EAU DE MER

(30) Priority: 01.10.2012 NO 20121115
(43) Date of publication of application: 12.08.2015
(73) Proprietor: SFD AS, 4130 Hjelmeland (NO)
(72) Inventor: BREDAHL, Harald, 4250 Kopervik (NO)
(74) Representative: Håmsø Patentbyrå AS
(86) International application number: PCT/NO2013/050162
(87) International publication number: WO 2014/054951

(56) References cited:
- WO-A1-02/074075
- WO-A2-2014/033535
- JP-A- H05 146 233
- US-A- 4 825 810
- US-A- 5 653 052
- "Kan gjerde av elektrisk strøm i sjowann brukes som et tiltak mot ekstem smitte av lakselus?", NORSK FISKEOPPDRETT NR 8/2011, page 78, XP008180102, Retrieved from the Internet: URL:http://lusedata.no/wp-content/uploads/ 2012/10/2011-NF8-Str%C3%B8mgjerde-mot-Ius. pdf
- INGVARSDOTTIR ET AL.: "Beskyttelse av laks i oppdrettsanlegg mot lakselus", SEAFARM PULSE GUARD (SPG), 27 April 2012 (2012-04-27), XP008179820, Retrieved from the Internet: URL:http://www.forskningsradet.no/servletJ Satellite?c=Page&hits=30&pagename=hav bruk%2FHovedsidemal&cid=12269942168928cque rystring=beskyttelse&spell=true&filters=la ngcodes%252Cno&param=globalprogramsitesear ch&programsite=h avbruk&maalsetting=havbruk%2Chavbruks&isgl obalsearch=true&configuration= nfrsear
- "Haper strom kan stoppe oppdrettsplager", BIOMARIN VEKST, 13 February 2008 (2008-02-13), XP055511945, Retrieved from the Internet: URL:http://www.forskningsradet.no/servlet/ Satellite?c=Page&hits=30&pagenam e=havbruk%2FHovedsidemal&cid=1226994216892 &querystring=beskyttelse&s pell=true&filters=langcodes%252Cno&param=g lobalprogamsitesearch&progra msite=havbruk&maalsetting=havbruk%2Chavbru ks&isglobalsearch=true&config uration=nfrsearch

## Description

The invention relates to an apparatus and a method for reducing the amount of external crustacean parasites on fish in farms. More particularly, the invention relates to the use of electrical current to paralyse, injure or kill pelagic stages of crustacean parasites before they attach to a host.

Farming fish in closed enclosures such as net cages means that an artificially large biomass will be present within a restricted volume. This gives good conditions for fish parasites and in particular for parasites that have only one host in the course of their life cycle. Crustacean fish parasites in the subclass Copepoda, the so-called copepods, are examples of such parasites.

In the farming of salmonoids, in particular salmon (S*almo salar*) and rainbow trout *(Oncorhynchus mykiss),* ectoparasite attacks by the copepods of the family Caligidae, in particular *Lepeophtheirus salmonis*, salmon louse, *Caligus elongatus*, so-called sea louse, and *C*. *rogercresseyi,* are a great problem. Like other crustaceans, these ectoparasites grow by moulting, and they go through 10 stages altogether in the course of their life cycles. From the egg, a free-swimming nauplius I larva is released first. In *L. salmonis*, it is 0.5 mm long and the sizes below refer to salmon lice. The nauplius I grows into a nauplius II larva, 0.6 mm long, which in turn grows into a copepodid 0.7 mm long. It is the copepodid that constitutes the infectious stage as the copepodid attaches to a host. The first three stages can last several weeks and the duration is dependent on the water temperature. By low water temperatures the larvae grow slowly. In this period, the small larvae have a limited ability to move actively in the water and will, in the main, drift with the water current. Thereby they are dispersed over a large area.

After the copepodid has attached to the host's skin, it moults again and develops through four chalimus stages, chalimus I - chalimus IV. This stage is characterized by the parasite being attached to the host's skin through a frontal filament. Therefore the parasite cannot move about freely on the host. The parasite feeds on fish mucus on the host's skin. The parasite grows from 1.1 mm into 2.3 mm during the chalimus stage. After the chalimus IV comes the pre-adult I stage, in which the parasite is no longer attached to the host by the frontal filament, but can move freely on the host's skin. Pre-adult I males are 3.4 mm long, females are 3.6 mm long. The parasite grows on to the pre-adult II stage; the male is then 4.3 mm long, the female 5.2 mm long. The parasite then moults for the last time and reaches the adult stage. An adult male is 5-6 mm long; the female is 8-12 mm long. After mating, the adult female releases its eggs into two egg sacs. These may each contain several hundred eggs. The egg strings are released, the eggs hatch and the life cycle repeats itself.

It is as a freely moving pre-adult and adult that the parasite causes the greatest injury. Primarily, the parasite feeds on mucus, but, in particular when there are many lice on a fish, will attack the skin layer so that underlying muscle tissue and bone tissue become exposed. The fish is then vulnerable to attacks by bacteria and fungi, and the fish will have problems in its osmoregulation. An extensive attack by salmon lice is lethal.

There are several known methods of removing lice from farmed fish without bringing the fish out of the net cage in which they are normally kept. These methods may be divided into bath treatment, treatment with active substances mixed into the feed and the use of cleaner fish.

In bath treatment, the bottom net of the net cage is usually raised to reduce the volume and a tarpaulin is extended around the net cage to isolate the net cage from currents. This is a laborious method. Bath treatment may include the use of hydrogen peroxide, pyrethroids or organophosphates. These agents can affect all stages present on the fish, that is from the chalimus I stage to the adult stage inclusive.

Of agents that are mixed into the feed, it is known to use avermectins, such as emamectin benzoate, and chitin synthesis inhibitors. Emamectin is effective against all the stages from chalimus I to adult inclusive. The chitin synthesis inhibitors inhibit moulting and are therefore effective from chalimus I to pre-adult II inclusive, but not against adult lice which are not to go through any more moults.

One drawback of chemicals, whether in bath or in feed, is that over time, the parasite develops resistance to these agents, and the agents therefore become less effective. When chemicals are used, a retention time from the treatment to the slaughtering of the fish is to be set in order to ensure that the fish flesh will not contain the chemical or that the amount of the chemical is below a defined level. The third method which includes the use of cleaner fish, especially wrasse, is an alternative to chemicals, and the development of resistance is not a problem. Wrasse will remove parasites that are easy to see and will, in the main, remove pre-adult and adult parasites. The drawback to the use of wrasse is that it is difficult to make them pass the winter in the net cages together with the salmonoids, they may escape through the net wall as they are substantially smaller than the salmonoids, and they may injure the salmonoids by so-called eye-picking.

Thus, there is a need for alternatives to today's methods of controlling crustacean parasites in fish farming, or at least supplementary methods. In particular, there is a need for alternatives that do not include the use of chemicals.

The inventors have surprisingly found that it is possible to kill or at least paralyse or injure the free-swimming larvae of ectoparasites like salmon lice so that they do not infect fish in net cages. For this purpose, a floating electric fence is used.

The use of an electric fence is known to keep fish within a defined area or to prevent fish from passing a barrier. This is known from both sea water and fresh water. Thus, the patent documents US 2,709,984 and US 5,448,968 teach the use of electric fish fences, and the patent documents US 1,515,547 and US 4,825,810 fish barriers for fish in rivers, for example. The patent document US 4,594,965 teaches the use of electricity to prevent undesired marine organisms from getting through a fence and the use of electricity to attract desired organisms and to stimulate the growth thereof.

The applicant's own patents NO313931, also published as WO 02/074075, and NO327350, also published as WO 2009/038471, disclose the use of electrically conductive net-cage bags to prevent fouling. The patent documents JP 7268252, JP 3224427 and JP 2003235402 disclose the use of electricity to prevent fouling of net structures in sea water as well.

The patent document US 5,653,052 teaches usage of two capacitor plates for killing or immobilizing larvae in fresh water. The purpose of the apparatus is especially to prevent fouling by fresh-water mussels in a water inlet. The purpose is achieved by at least one of the capacitor plates being insulated and a low-power high-voltage AC generator being connected to the plates. An alternating current is thereby induced inside the larvae, and this alternating current has an immobilizing or lethal effect on the larvae. There is little electrical current flowing through the water. The patent document points out that this method will not work on larvae in sea water because sea water is a better electrical conductor than fresh water and the electrical current will flow past the larva on the outside thereof and not affect the interior of the larva.

By a net cage is meant, in what follows, a defined enclosure for fish. At the top, along its outer side, the net cage is provided with floating means which keep the net cage in place in a water column. The net cage is provided with side walls and a bottom consisting of a net, usually a seine. From the floating means, a wall may extend upwards to prevent fish in the net cage from jumping out of the net cage. The net cage may be provided with a net over the net cage to prevent access by birds. In the water surface, a net cage may have a circular shape, a square shape or some other appropriate shape. A net cage is moored to the seabed by anchoring means of a kind known per *se.* A net cage may lie by itself or be connected to other net cages through a shared mooring system. The net cages may be connected to a floating stage. Net cages may be of different sizes. Known within the art are, for example, circular net cages with a circumference of approximately 120 metres and with a diameter of approximately 40 metres.

By a fish farm is meant, in what follows, a farm consisting of one or more net cages. The net cages may contain fish or they may be empty of fish.

By the main direction of flow of the fish farm is meant the dominant direction of flow of the water that passes through the fish farm. For fish farms in which the tidal movement determines the main direction of flow, the main direction of flow will turn through 180° at each reversal of the tide. The main direction of flow may change periodically.

By a buoyancy element is meant a single buoyancy body or a compound buoyancy body which is lighter than water. The buoyancy body may be filled with air or a material which Is lighter than water. The buoyancy body may be a rigid or flexible tubular body. The buoyancy body may be made up of several connected buoyancy bodies. The buoyancy body may also be composed of, in the main, ball-shaped buoys that are connected into a chain.

By injury to a pelagic larva is meant, in what follows, that irreversible or reversible injury is inflicted on the larva, having a disturbing or destructive effect on the further life cycle of the larva. Such injury may be disturbing or destructive to the larva's infection capacity relative to a host, ability to attach to a surface, ability to grow or ability to undergo metamorphosis. By injury is also meant lethal injury. Reversible injury includes a temporary paralysation as well.

The invention has for its object to remedy or reduce at least one of the drawbacks of the prior art or at least provide a useful alternative to the prior art.

The object is achieved through features which are specified in the description below and in the claims that follow.

In a first aspect, according to claim 1, the invention relates to a floating electric fence arranged to inflict injury on a pelagic larva in sea water; the electric fence is provided with a buoyancy element, a bottom element, an anchoring device, at least two electrical conductors positioned side by side and submerged at least in a portion, the at least two electrical conductors being connected to an electric DC source arranged to supply the first of the at least two electrical conductors with pulsating electrical current and with alternating polarity, and to provide the second one of the at least two electrical conductors with pulsating electrical current of opposite polarity to that of the first electrical conductor. A portion of the electric fence may be positioned upstream of at least one net cage. The electric fence may be provided with a shaped element between the buoyancy element and the bottom element. The shaped element may extend from the buoyancy element to the bottom element. The shaped element may consist of a net. The electrical conductors may extend from the buoyancy element to the bottom element. The electrical conductors may be attached to the shaped element. The shaped element may include the electrical conductors.

The electrical conductors submerged in a portion may include a material selected from a group consisting of copper, aluminium, plastic-coated copper, plastic-coated aluminium, titanium, carbon fibre and electrically conductive plastic. The distance between two submerged electrical conductors may be from 5 cm to 20 cm inclusive. The distance between two submerged electrical conductors may be from 5 cm to 15 cm inclusive. The distance between two submerged electrical conductors may be from 5 cm to 10 cm inclusive.

In a second aspect, according to claim 12, the invention relates to a method of damaging a pelagic larva in sea water, the method including letting the larva drift into a pulsed electrical field in which the direction of the field is reversed between pulses. The pelagic larva may be a crustacean larva. The crustacean larva may belong to the family Caligidae.

The method may further include damaging the pelagic larva in the vicinity of a fish farm which includes at least one net cage, the method including positioning at least one electric fence as described in the foregoing at least partially around the at least one net cage. The method may further include positioning a portion of the electric fence upstream of the at least one net cage.

The method may further include providing the fish farm with a water-current meter arranged to measure the water flow direction through the fish farm; the water-current meter may communicate with an electric power source which supplies the electric fence with current, so that the electric power source may supply at least a portion of the electric fence upstream of the at least one net cage of the fish farm with current.

In what follows, examples of preferred embodiments are shown, which are visualized in the accompanying drawings, in which:
- Figure 1: shows schematically a fish farm in which one electric fence in accordance with the invention is positioned upstream of the fish farm and one electric fence is positioned downstream of the fish farm;
- Figure 2: shows schematically, on another scale than figure 1, a fish farm viewed from above, the fish farm being partially surrounded by four electric fences;
- Figure 3: shows schematically an electric fence in a side view on a larger scale;
- Figure 4: shows schematically an electric fence in a side view on the same scale as figure 3, the electric fence being provided with a shaped element;
- Figure 5: shows, in a perspective view on a different scale, an electric fence in an alternative embodiment;
- Figure 6: shows, on the same scale as figure 2, a net cage in a fish farm surrounded by an electric fence;
- Figure 7: shows, on the same scale as figure 5, a side view of an electric fence and a farming net cage as shown in figure 6;
- Figure 8: shows, on the same scale as figure 7, a side view of an electric fence and a farming net cage in an alternative embodiment; and
- Figures 9A-F: show examples of electrical pulse trains which may be sent through the electric fence.

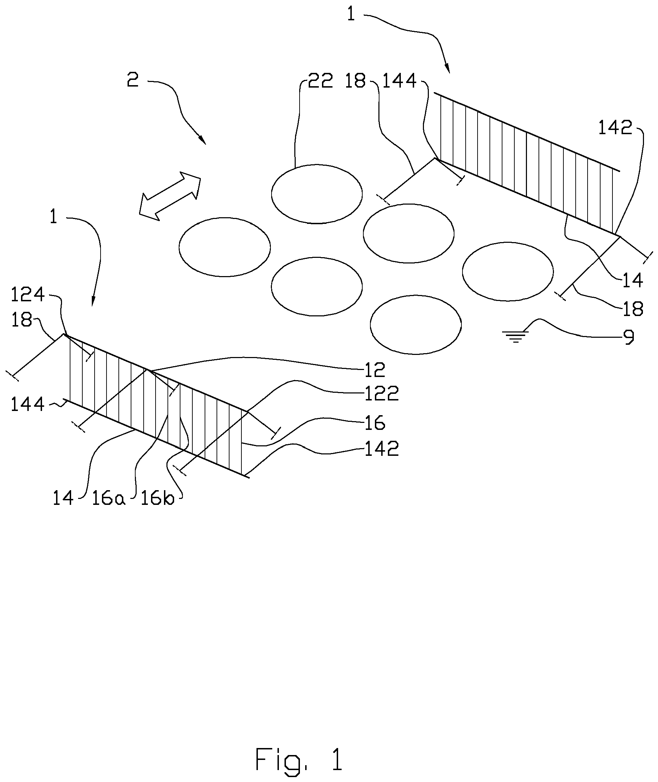

In the drawings, the reference numeral 1 indicates an electric fence in accordance with the invention. In a first exemplary embodiment as shown in figure 1, one electric fence 1 is positioned upstream of a fish farm 2, and one electric fence 1 is positioned downstream of the fish farm 2. In the figures, the main direction of flow is indicated by an open double arrow. A main direction of flow may be dominated by the tidal movement.

The fish farm 2 is shown with net cages 22, drawn schematically, spread over two rows. The net cages 22 are shown as circular net cages, but the person skilled in the art will know that the net cages 22 may have another shape. The person skilled in the art will also know that a fish farm 2 may have one or more net cages 22 and that these can be arranged in other ways, such as in one row. The net cages 22 are provided with moorings, a feeding plant and other necessary installations known in the art, but this is not shown in the schematically drawn figures.

In this description, the term fence is used. This is to be understood as the subject matter of the application resembling a fence. This is not to be understood as the fence constituting a physical barrier that prevents pelagic larvae and other things from drifting through and past the fence.

The electric fence 1 is provided with a buoyancy element 12, a bottom element 14 and a plurality of electrical conductors 16, 16a, 16b extending between the buoyancy element 12 and the bottom element 14. The electric fence is further provided with an anchoring device 18. The buoyancy element 12 may be formed in a way known in the trade as described in the introductory part, and the buoyancy element 12 is not described in more detail.

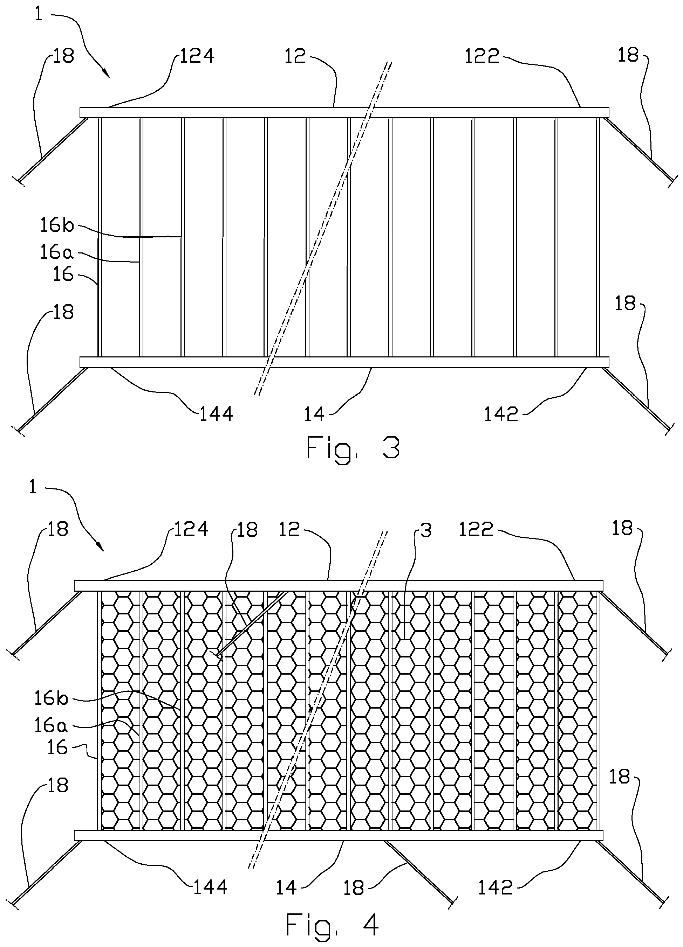

In figure 1, the anchoring device 18 is shown attached to the bottom element 14 in a first end portion 142 and a second end portion 144 in one electric fence 1, and the anchoring device 18 is attached to the buoyancy element 12 in a first end portion 122 and a second end portion 124 in another electric fence 1. In a further alternative embodiment, as shown in figure 3, the anchoring device 18 may be attached to both the buoyancy element 12 and the bottom element 14. If necessary, the anchoring device 18 may be attached in a plurality of places along the bottom element 14 and/or the buoyancy element 12 as shown in figure 4. The anchoring device 18 is of a kind known *per se*. The way in which the anchoring device 18 has been secured to the electric fence 1 and a seabed, not shown, is common general knowledge of the trade and is not described in more detail. The anchoring device 18 is only shown in its upper portion. In a further alternative embodiment, the anchoring device 18 may be attached to the frame mooring (not shown) of the fish farm 2.

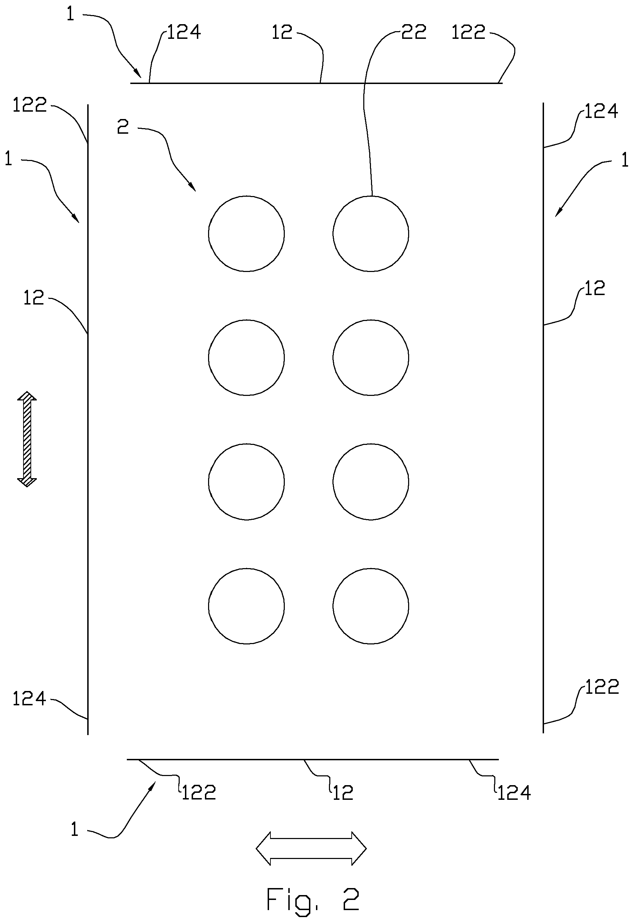

In an alternative embodiment, the electric fence 1 may surround the fish farm 2 on more than two sides. In figure 2, a fish farm 2 partially surrounded by four electric fences 1 is shown schematically. The main direction of flow is indicated by an open double arrow. Another direction of flow which may periodically be dominant is shown by a hatched arrow. The flow directions are shown perpendicular to the longitudinal direction of the fence 1. In this exemplary embodiment, the electric fence 1 could be effective against salmon-louse larvae, no matter what direction the water flow is coming from, also if the direction of flow is not perpendicular to the longitudinal direction of the electric fence 1.

Figure 3 shows the electric fence 1 in one embodiment. The electrical conductors 16, 16a, 16b extend side by side from the buoyancy element 12 to the bottom element 14 in the longitudinal direction of the electric fence 1. The electrical conductors 16, 16a, 16b are supplied with electrical current from an electric power source, not shown, through cables, not shown, of a kind known *per se* and in a known manner. The power source is arranged in such a way that the polarity of an electrical conductor 16a is the opposite of the polarity of an electrical conductor 16b which is positioned side by side with the electrical conductor 16a.

Figure 4 shows the electric fence 1 in an alternative embodiment. The electrical conductors 16, 16a, 16b are attached to a shaped element 3. This has the advantage of the electrical conductors 16, 16a, 16b not touching each other even if there is a strong current and/or great wave height. Short-circuiting between the conductors 16, 16a, 16b is thereby avoided. The shaped element 3 may consist of a net. The net 3 is attached to the buoyancy element 12 and the bottom element 14.

The electrical conductors 16, 16a, 16b may be woven into the net 3. In an alternative embodiment, the electrical conductors 16, 16a, 16b may be attached to the shaped element 3 but not to the bottom element 14. In a further alternative embodiment, the electrical conductors 16, 16a, 16b may be attached to the shaped element 3 but not to the buoyancy element 12.

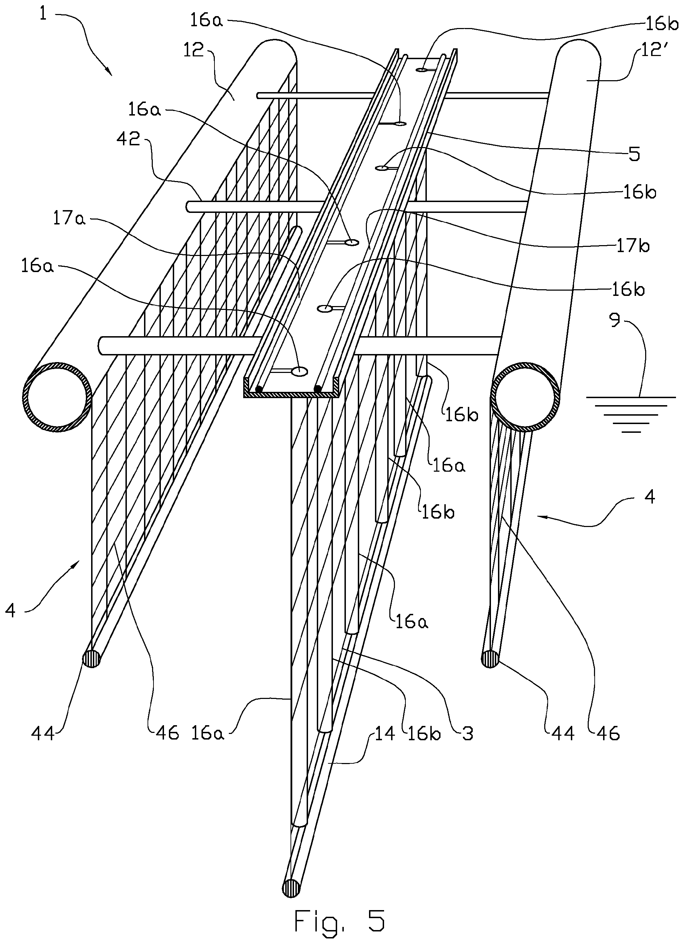

Figure 5 shows a further alternative embodiment of the electric fence 1. The electric fence 1 includes two buoyancy elements 12, 12' which are positioned side by side and are floating in the water surface 9. The buoyancy elements 12, 12' are connected to a plurality of spacer bars 42 which maintain the distance between the buoyancy elements 12, 12'. The buoyancy elements 12, 12' may consist of pipes made of a polymer material, such as polypropylene or PVC. The spacer bars 42 may also consist of pipes made of a polymer material, and the spacer bars 42 are fixed to the buoyancy elements 12, 12' with a welding seam. From the buoyancy element 12, 12', a side wall 4 projects downwards. The side wall 4 includes a bottom element 44 and a net 46. The net 46 is attached to the buoyancy element 12, 12' and to the bottom element 44 and is kept extended between the buoyancy element 12, 12' and the bottom element 44. Between the buoyancy elements 12, 12' and side by side with these, the electrical fence 1 is provided with an elongated supporting element 5. The supporting element 5 may consist of a flexible polymer material such as polypropylene or PVC. The supporting element 5 is fixed to the spacer bars 42. The shaped element 3 projects downwards in the water from the supporting element 5. The shaped element 3 is provided with the bottom element 14 at the bottom. The shaped element 3 is kept extended between the supporting element 5 and the bottom element 14. From the supporting element 5 further electrical conductors 16a,b project into the water. The electrical conductors 16a,b are attached to the shaped element 3. In figure 5, the shaped element 3 is shown in a simplified manner. The electrical conductors 16a,b consist of an electrically conductive material such as copper, aluminium, steel, titanium, carbon fibre or an electrically conductive polymer material. Electrical conductors 16a,b consisting of titanium are more resistant to corrosion compared to electrical conductors 16a,b consisting of other metals and alloys. The electrical conductors 16a,b may be coated with a plastic material that is electrically conductive. It has the advantage of the electrical conductors 16a,b being protected against corrosion. The electrical conductors 16a,b are supplied with electrical current from one or more power sources (not shown) through electrical conductors 17a,b. This embodiment of the electric fence 1 has the advantage of the side walls 4 protecting the electrical conductors 16a,b from larger, drifting objects which, on contact, could short-circuit the electrical conductors 16a,b. The embodiment also has the advantage of personnel who, by misfortune, fall into the sea from a vessel not coming into contact with the electrical conductors 16a,b. In an alternative embodiment, the shaped element 3 may be provided with the electrical conductors 16a,b and the shaped element 3 may be attached to the spacer bars 42. The electrical conductors 17a,b may be attached to the spacer bars 42. In this embodiment, the electrical fence 1 is not provided with the supporting element 5.

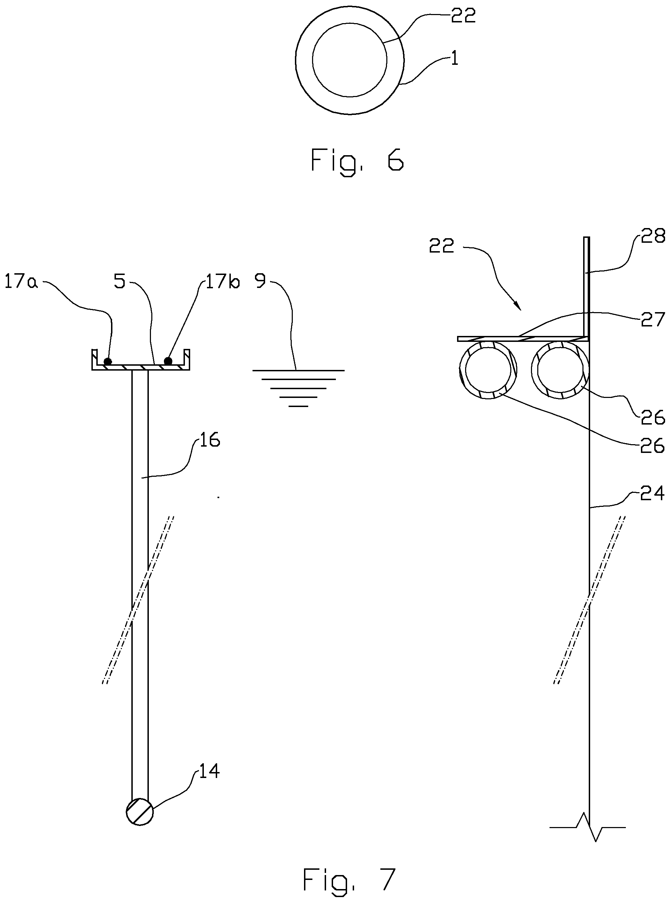

A further alternative embodiment is shown in figures 6 and 7. The electric fence 1 may surround a net cage 22 as it is shown schematically in figure 6. The net cage 22 may be provided with surrounding buoyancy bodies 26, shown as tubes in figure 7. The buoyancy bodies 26 are held together with radial clamps (not shown) and carry a walkway 27. The buoyancy bodies 26 further carry a railing 28. The railing 28 holds a submerged seine 24 forming the net wall of the net cage 22. The seine 24 is shown extended above the water surface 9 so that an upward-projecting wall is formed, which prevents fish in the net cage 22 from jumping out of the net cage 22. Such a net cage 22 is known in the art. The electric fence 1 as shown in figure 5 may be used as a surrounding electric fence 1 around a net cage 22. The electric fence 1 shown in figure 5 may also be simplified in a variant of this embodiment (not shown). One buoyancy body 12' with its associated spacers 42, side wall 4, bottom element 44 and net 46 may be removed as the net cage 22 in itself will protect the electric fence 1 from one side. In a further variant, both buoyancy elements 12, 12' and the associated spacer bars 42, side walls 4, bottom elements 44 and nets 46 may be removed as it is shown in figure 7. The electric fence 1 that surrounds the net cage 22 may be moored to the frame mooring (not shown) of the net cage 22. The electric fence 1 may be provided with an anchoring device 18 of its own. In this embodiment, the supporting element 5 constitutes the buoyancy element of the electric fence 1.

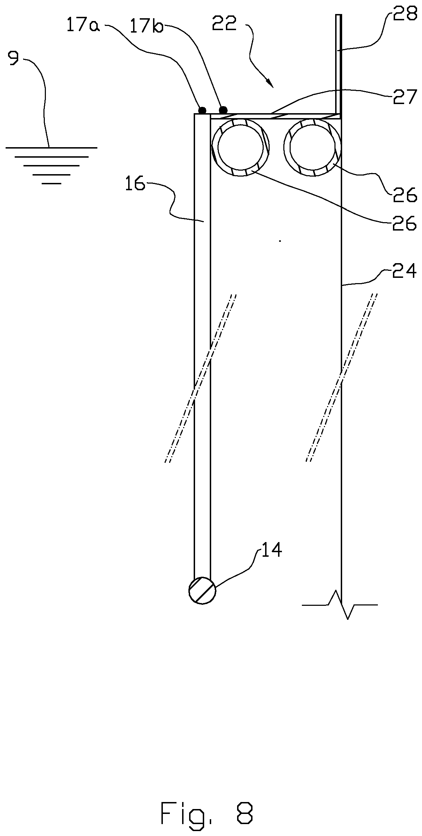

A further alternative embodiment is shown in figure 8. The electric fence 1 may surround a net cage 22 as it is shown schematically in figure 6. The electric fence 1 surrounding the net cage 22 may be moored to the frame mooring (not shown) of the net cage 22. The electric fence 1 is attached to the surrounding buoyancy body 26 of the net cage 22. The buoyancy bodies 26 thereby replace the supporting element 5.

The fish farm 2 may be provided with a water-current meter (not shown) which may be arranged to measure the direction of flow of the water through the fish farm 2. The water-current meter may be arranged to communicate with a control unit which is arranged to control the electric power source. It is thereby achievable to have voltage applied to the electrical conductors 16, 16a, 16b in a portion of the electric fence 1, in the electric fence 1 or the electric fences 1 on the side or sides of the fish farm 2 facing the flow. A portion of the electric fence 1, the electric fence 1 or the electric fences 1 that lie(s) downstream of the fish farm 2 may be left without voltage applied to the electrical conductors 16, 16a, 16b.

In situations in which sexually mature salmon lice with egg strings have been observed on the fish in the fish farm 1, it may be advantageous to have voltage applied to the electric fence 1 or the electric fences 1 that are located downstream of the fish farm 2. Thus, newly hatched salmon-louse larvae that are about to drift away from the fish farm 2 could be killed as well, or at least be injured so that they are no longer infectious, and this helps to reduce the overall infection pressure from salmon lice.

The invention is not restricted to any particular distance between the electrical conductors 16, 16a, 16b that are positioned side by side. The distance may be 5 cm; 7 cm; 10 cm; 12 cm; 15 cm; 17 cm or 20 cm or other distances smaller than 5 cm, or other distances larger than 20 cm or other distances between 5 and 20 cm.

The invention is not restricted to any particular electric voltage between the electrical conductors 16, 16a, 16b. It has turned out to be advantageous for the current to consist of direct current. The voltage between the anode and cathode may be 30 V; 50 V; 75 V; 100 V; 125 V; 150 V; 175 V; 200 V; 220 V; 500 V; 1000 V or 2000 V or other voltages lower than 30 V, or other voltages higher than 2000 V, or other voltages between 20 V and 2000 V.

It has turned out to be advantageous for the electrical current between the anode and cathode to be divided between time periods with current and time periods without current, so-called pulsing. The invention is not restricted to any particular pulsing pattern. The time period with current may be 0.001 s; 0.005 s; 0.01 s; 0.05 s; 0.075 s; 0.1 s; 0.125 s; 0.15 s; 0.175 s; 0.2 s; 0.3 s; 0.4 s; 0.5 s; 0.75 s; 1.0 s; 1.25 s; 1.5 s or other time periods shorter than 0.001 s, or other time periods longer than 1.5 s, or other time periods between 0.001 s and 1.5 s. The time period without current may be 0.001 s; 0.005 s; 0.01 s; 0.05 s; 0.075 s; 0.1 s; 0.2 s; 0.3 s; 0.4 s; 0.5 s; 0.75 s; 0.9 s; 1.0 s; 1.25 s; 1.5 s, or time periods shorter than 0.001 s, or time periods longer than 1.5 s, or other time periods between 0.001 s and 1.5 s.

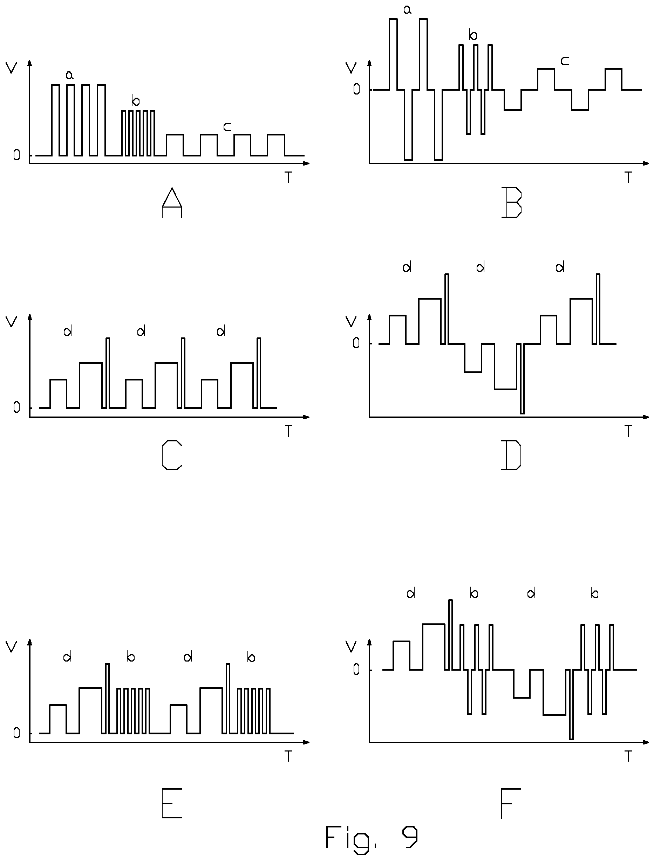

It has turned out to be advantageous to emit one pulse of a fixed time period followed by a fixed time period without current in a repetitive pattern. It has also turned out to be advantageous to emit pulses in pulse trains. It has also turned out to be advantageous to emit pulses in different pulse trains in succession. A first pulse train may, for example, be composed of a pulse with a voltage of 30 V lasting 0.01 seconds followed by a first time period without current followed by a new pulse of 30 V lasting 0.01 seconds and so that the pulse train comprises 5 such pulses, for example. The first pulse train may be followed by a second pulse train which may be composed of a plurality of pulses of 70 V lasting 0.05 seconds followed by a second time period without current. The two pulse trains follow one after the other in an alternating fashion. In a further alternative method, three different pulse trains may follow one after the other in an alternating fashion. Figures 9A-F show some examples of possible pulse trains. Figures 9A, 9C, 9E show schematically possible pulse trains, whereas figures 9B, 9D, 9F show possible ways of reversing the polarity of the pulses within one pulse train and between successive pulse trains.

### Example 1

Glass beakers, 15 cm in diameter, were filled with 60 ml of sea water. Copepodids of salmon lice, *L. salmonis*, were transferred to the glass beakers. Two electrical conductors were lowered into each glass beaker with a 10 cm distance between the electrical conductors. Pulsed DC was supplied to each glass beaker for 10 seconds, with the exception of the control group, to which no current was supplied.

The number of inactive copepodids was counted in each glass beaker immediately on termination of the treatment, 5 minutes after treatment and 3 hours after treatment. No visible swimming motion was considered as inactivity. There was no reduced activity in the control group, but inactivity in the other groups.

### Example 2

Copepodids of *L. salmonis* were treated with DC in glass beakers with a diameter of 10 cm. One group constituted a control group and was not treated with DC, whereas two other groups were treated with pulsed DC.

Immediately after treatment, the copepodids were transferred to salmon (*Salmo salar*) in 1000 l vessels. After 14 days, the infection pressure was measured by counting the number of salmon lice in the chalimus stage on each salmon. Two control groups of fish had an average of respectively 22 and 26 chalimi per fish. Two groups of fish infected with copepodids, treated according to a first pulsed-DC regime had an average of 12 and 15 chalimi per fish. Two groups of fish infected with copepodids treated according to a second pulsed-DC regime had an average of 8 and 11 chalimi per fish.

Even a short exposure of the copepodids to pulsating DC reduces the infection capacity of the copepodids. This may be due to DC being lethal to part of the copepodite population, or to the infection capacity of the copepodids decreasing temporarily or lastingly, or a combination of these factors.

### Example 3

A trial was carried out in net cages 22 floating in sea water. The net cages 22 measured 1.5 m in diameter and were 6 m deep. There were two control net cages 22 and two net cages 22 surrounded by an electric fence 1 in accordance with the invention. The salmon (*S. salar*) were about 21 cm long and weighed about 75 g at the start of the trial. There were 120 fish in each net cage 22. The fish were free of salmon lice at the start of the trial. The trial started in the middle of November and was terminated at the end of April the following year.

Salmon lice on the fish were counted every 14 days. Ten fish from each net cage were caught and anaesthetized. After the salmon-lice counting, the fish were returned to their respective net cages 22.

It is of particular interest for this invention to count the number of lice in the chalimus stages. The invention will have an effect on the copepodids drifting through and past the electric fence 1, but not on salmon lice that have managed to settle on the fish. They will develop further into the pre-adult and adult stages over time. There was a statistically significant difference between the settlements of salmon lice on the fish in the control group compared with the group inside the electric fence 1. This can be expressed in this way: The total number of chalimi registered at each point in time in all the groups constitutes 100 %. In one count, 65 % of the chalimi were found in the control group. In another count, 91 % of the chalimi were found in the control group. At the different sampling times, the proportion of chalimi in the group within the electrical fence 1 varied between 9 % and 35 %.

By a mishap, the electric fence 1 did not function according to intentions for a period. When chalimi were counted after the mishap, the situation was the reverse, as 45 % of the chalimi were found in the control group and 55 % in the group within the electric fence. This shows that it was not local flow conditions that exposed the control group to a higher infection pressure than the other group.

## Claims

1. A floating, electric fence (1) arranged to inflict injury on a pelagic larva in sea water; the electric fence (1) is provided with a buoyancy element (5; 12, 12'; 26), a bottom element (14, 14', 14"), an anchoring device (18), at least two electrical conductors (16, 16a,b) which are positioned side by side and are submerged at least in a portion, **characterized in that** the at least two electrical conductors (16, 16a,b) are connected to an electric DC source arranged to provide the first of the at least two electrical conductors (16, 16a,b) with pulsating electrical current and with alternating polarity, and to supply the second one of the at least two electrical conductors (16, 16a,b) with pulsating electrical current of opposite polarity to that of the first electrical conductor (16, 16a,b).

2. The electric fence (1) in accordance with claim 1, **char**a**cterized in** that the electric fence (1) is provided with a shaped element (3) between the buoyancy element (5; 12, 12') and the bottom element (14, 14', 14").

3. The electric fence (1) in accordance with claim 2, **characterized in that** the shaped element (3) extends from the buoyancy element (5; 12, 12') to the bottom element (14, 14', 14").

4. The electric fence (1) in accordance with claim 2, **characterized in that** the shaped element (3) consists of a net.

5. The electric fence (1) in accordance with claim 1, **characterized in that** the electrical conductors (16, 16a,b) extend from the buoyancy element (5; 12, 12') to the bottom element (14, 14', 14").

6. The electric fence (1) in accordance with claims 1, 2 and 5, **characterized in that** the electrical conductors (16, 16a,b) are fixed to the shaped element (3).

7. The electric fence (1) in accordance with claims 1 and 2, **characterized in that** the shaped element (3) includes the electrical conductors (16, 16a,b).

8. The electric fence (1) in accordance with claim 1, **characterized in that** the electrical conductors (16, 16a,b) submerged in a portion include a material selected from a group composed of copper, aluminium, plastic-coated copper, plastic-coated aluminium, titanium, carbon fibre and electrically conductive plastic.

9. The electric fence (1) in accordance with claim 1, **characterized in that** the distance between two submerged electrical conductors (16, 16a,b) is from 5 cm to 20 cm inclusive.

10. The electric fence (1) in accordance with claim 9, **characterized in that** the distance between two submerged electrical conductors (16, 16a,b) is from 5 cm to 15 cm inclusive.

11. The electric fence (1) in accordance with claim 10, **characterized in that** the distance between two submerged electrical conductors (16, 16a,b) is from 5 cm to 10 cm inclusive.

12. A method of damaging a pelagic larva in sea water, the method including letting the larva drift into a pulsed electric field in which the field direction is reversed between pulses.

13. The method in accordance with claim 12, wherein the pelagic larva is a crustacean larva.

14. The method in accordance with claim 13, wherein the crustacean larva belongs to the family Caligidae.

15. The method in accordance with claim 12, wherein the method further includes damaging the pelagic larva in the vicinity of a fish farm (2) which includes at least one net cage (22), and wherein the method includes positioning at least one electric fence (1) in accordance with claim 1 at least partially around the at least one net cage (22).

16. The method in accordance with claim 15, wherein the method further includes positioning a portion of the electric fence (1) upstream of the at least one net cage (22).

17. The method in accordance with claim 15, wherein the method further includes providing the fish farm (2) with a water-current meter arranged to measure the direction of water flow through the fish farm (2); the water-current meter can communicate with an electric power source which supplies the electric fence (1) with current so that the electric power source supplies at least a portion of the electric fence (1) upstream of the at least one net cage (22) of the fish farm (2) with current.

## Patentansprüche

1. Schwimmender, elektrischer Zaun (1), der angeordnet ist, um einer pelagischen Larve im Meerwasser Verletzungen zuzufügen; wobei der elektrische Zaun (1) versehen ist mit einem Auftriebselement (5; 12, 12'; 26) mit einem unteren Element (14, 14', 14"), mit einer Verankerungsvorrichtung (18), mit mindestens zwei elektrischen Leiter (16, 16a,b), die nebeneinander angeordnet und mindestens in einem Abschnitt eingetaucht sind, **dadurch gekennzeichnet, dass** die mindestens zwei elektrischen Leiter (16, 16a,b) mit einer elektrischen Gleichstromquelle verbunden sind, die so angeordnet ist, um den ersten der mindestens zwei elektrischen Leiter (16, 16a,b) mit pulsierendem elektrischen Strom und mit Wechselpolarität zu versorgen, und um den zweiten der mindestens zwei elektrischen Leiter (16, 16a,b) mit pulsierendem elektrischen Strom entgegengesetzter Polarität zu dem des ersten elektrischen Leiters (16, 16a,b) zu versorgen.

2. Elektrischer Zaun (1) nach Anspruch 1, **dadurch gekennzeichnet, dass** der elektrische Zaun (1) zwischen dem Auftriebselement (5; 12, 12') und dem unteren Element (14, 14', 14") mit einem Formelement (3) versehen ist.

3. Elektrischer Zaun (1) nach Anspruch 2, **dadurch gekennzeichnet, dass** sich das Formelement (3) vom Auftriebselement (5; 12, 12') bis zum unteren Element (14, 14', 14") erstreckt.

4. Elektrischer Zaun (1) nach Anspruch 2, **dadurch gekennzeichnet, dass** das Formelement (3) aus einem Netz besteht.

5. Elektrischer Zaun (1) nach Anspruch 1, **dadurch gekennzeichnet, dass** sich die elektrischen Leiter (16, 16a, b) vom Auftriebselement (5; 12, 12') zum unteren Element (14, 14', 14") erstrecken.

6. Elektrischer Zaun (1) nach den Ansprüchen 1, 2 und 5, **dadurch gekennzeichnet, dass** die elektrischen Leiter (16, 16a,b) an dem Formelement (3) befestigt sind.

7. Elektrischer Zaun (1) nach den Ansprüchen 1 und 2, **dadurch gekennzeichnet, dass** das Formelement (3) die elektrischen Leiter (16, 16a,b) beinhaltet.

8. Elektrischer Zaun (1) nach Anspruch 1, **dadurch gekennzeichnet, dass** die in einem Abschnitt eingetauchten elektrischen Leiter (16, 16a,b) ein Material beinhalten, das ausgewählt ist aus einer Gruppe bestehend aus Kupfer, Aluminium, kunststoffbeschichtetem Kupfer, kunststoffbeschichtetem Aluminium, Titan, Kohlefaser und elektrisch leitfähigem Kunststoff.

9. Elektrischer Zaun (1) nach Anspruch 1, **dadurch gekennzeichnet, dass** der Abstand zwischen zwei eingetauchten elektrischen Leitern (16, 16a,b) zwischen 5 cm bis einschließlich 20 cm beträgt.

10. Elektrischer Zaun (1) nach Anspruch 9, **dadurch gekennzeichnet, dass** der Abstand zwischen zwei eingetauchten elektrischen Leitern (16, 16a,b) zwischen 5 cm bis einschließlich 15 cm beträgt.

11. Elektrischer Zaun (1) nach Anspruch 10, **dadurch gekennzeichnet, dass** der Abstand zwischen zwei eingetauchten elektrischen Leitern (16, 16a,b) zwischen 5 cm bis einschließlich 10 cm beträgt.

12. Verfahren zum Beschädigen einer pelagischen Larve in Meerwasser, wobei das Verfahren das Abdriften der Larve in ein gepulstes elektrisches Feld beinhaltet, in dem die Feldrichtung zwischen den Impulsen umgekehrt wird.

13. Verfahren nach Anspruch 12, worin die pelagische Larve eine Krustentierlarve ist.

14. Verfahren nach Anspruch 13, worin die Krustentierlarve zur Familie der Caligidae gehört.

15. Verfahren nach Anspruch 12, wobei das Verfahren ferner das Beschädigen der pelagischen Larve in der Nähe einer Fischzucht (2) umfasst, welche mindestens einen Netzkäfig (22) beinhaltet, und wobei das Verfahren das Positionieren mindestens eines elektrischen Zauns (1) in Übereinstimmung mit Anspruch 1 mindestens teilweise um den mindestens einen Netzkäfig (22) beinhaltet.

16. Verfahren nach Anspruch 15, wobei das Verfahren ferner das Positionieren eines Abschnitts des elektrischen Zauns (1) stromaufwärts des mindestens einen Netzkäfigs (22) beinhaltet.

17. Verfahren nach Anspruch 15, wobei das Verfahren ferner das Bereitstellen eines Wasserstrommessers für die Fischzucht (2) zum Messen der Richtung des Wasserflusses durch die Fischzucht (2) beinhaltet; wobei der Wasserstrommesser mit einer elektrischen Energiequelle kommunizieren kann, die den elektrischen Zaun (1) mit Strom versorgt, so dass die elektrische Energiequelle mindestens einen Teil des elektrischen Zauns (1) stromaufwärts des mindestens einen Netzkäfigs (22) der Fischzucht (2) mit Strom versorgt.

## Revendications

1. Clôture électrique flottante (1) agencée pour blesser une larve pélagique dans l'eau de mer ; où la clôture électrique (1) est munie d'un élément flottant (5 ; 12, 12' ; 26), d'un élément de fond (14, 14', 14"), d'un dispositif d'ancrage (18), d'au moins deux conducteurs électriques (16, 16a,b) qui sont positionnés côte à côte et sont immergés au moins en partie, **caractérisée en ce que** les au moins deux conducteurs électriques (16, 16a,b) sont raccordés à une source de courant continu électrique agencée pour fournir au premier des au moins deux conducteurs électriques (16, 16a,b) un courant électrique pulsé et de polarité alternée, et pour alimenter le second des au moins deux conducteurs électriques (16, 16a,b) en courant électrique pulsé de polarité opposée à celle du premier conducteur électrique (16, 16a,b).

2. Clôture électrique (1) selon la revendication 1, **caractérisée en ce que** la clôture électrique (1) est munie d'un élément profilé (3) entre l'élément flottant (5 ; 12, 12') et l'élément inférieur (14, 14', 14").

3. Clôture électrique (1) selon la revendication 2, **caractérisée en ce que** l'élément profilé (3) s'étend de l'élément flottant (5 ; 12, 12') à l'élément inférieur (14, 14', 14").

4. Clôture électrique (1) selon la revendication 2, **caractérisée en ce que** l'élément profilé (3) consiste en un filet.

5. Clôture électrique (1) selon la revendication 1, **caractérisée en ce que** les conducteurs électriques (16, 16a,b) s'étendent de l'élément flottant (5 ; 12, 12') à l'élément inférieur (14, 14', 14").

6. Clôture électrique (1) selon les revendications 1, 2 et 5, **caractérisée en ce que** les conducteurs électriques (16, 16a,b) sont fixés à l'élément profilé (3).

7. Clôture électrique (1) selon les revendications 1 et 2, **caractérisée en ce que** l'élément profilé (3) comprend les conducteurs électriques (16, 16a,b).

8. Clôture électrique (1) selon la revendication 1, **caractérisée en ce que** les conducteurs électriques (16, 16a,b), en partie immergés, comprennent un matériau choisi dans un groupe composé de cuivre, aluminium, cuivre revêtu de plastique, aluminium revêtu de plastique, titane, fibre de carbone et plastique électriquement conducteur.

9. Clôture électrique (1) selon la revendication 1, **caractérisée en ce que** la distance entre deux conducteurs électriques immergés (16, 16a,b) est de 5 cm à 20 cm inclus.

10. Clôture électrique (1) selon la revendication 9, **caractérisée en ce que** la distance entre deux conducteurs électriques immergés (16, 16a,b) est de 5 cm à 15 cm inclus.

11. Clôture électrique (1) selon la revendication 10, **caractérisée en ce que** la distance entre deux conducteurs électriques immergés (16, 16a,b) est de 5 cm à 10 cm inclus.

12. Procédé pour endommager une larve pélagique dans l'eau de mer, le procédé comprenant le fait de laisser la larve dériver dans un champ électrique pulsé dans lequel la direction du champ est inversée entre les impulsions.

13. Procédé selon la revendication 12, dans lequel la larve pélagique est une larve de crustacé.

14. Procédé selon la revendication 13, dans lequel la larve de crustacé appartient à la famille des Caligidae.

15. Procédé selon la revendication 12, dans lequel le procédé comprend en outre l'endommagement des larves pélagiques à proximité d'une ferme piscicole (2) laquelle comprend au moins une cage en filet (22), et dans lequel le procédé comprend le positionnement d'au moins une clôture électrique (1) selon la revendication 1 autour au moins partiellement de l'au moins une cage en filet (22).

16. Procédé selon la revendication 15, dans lequel le procédé comprend en outre le positionnement d'une partie de la clôture électrique (1) en amont de l'au moins une cage en filet (22).

17. Procédé selon la revendication 15, dans lequel le procédé comprend en outre le fait de doter la ferme piscicole (2) d'un compteur de courant d'eau agencé pour mesurer la direction d'écoulement de l'eau à travers la ferme piscicole (2) ; où le compteur de courant d'eau peut communiquer avec une source électrique qui alimente la clôture électrique (1) en courant, de sorte que la source électrique fournit au moins une partie de la clôture électrique (1) en amont de l'au moins une cage en filet (22) de la ferme piscicole (2) en courant.
